# EUROPÄISCHE PATENTSCHRIFT

(11) **EP 1 046 174 B1**
(45) Veröffentlichungstag und Bekanntmachung des Hinweises auf die Patenterteilung: **26.03.2003**
(21) Anmeldenummer: 99906113.8
(22) Anmeldetag: 11.01.1999
(51) Int. Cl.: G21C 9/06, G21C 19/317

(54) **VORRICHTUNG ZUR KATALYTISCHEN UMSETZUNG VON WASSERSTOFF**
DEVICE FOR THE CATALYTIC CONVERSION OF HYDROGEN
DISPOSITIF POUR EFFECTUER UNE CONVERSION CATALYTIQUE D'HYDROGENE

(30) Priorität: 17.01.1998 DE 19801618
(43) Veröffentlichungstag der Anmeldung: 25.10.2000
(73) Patentinhaber: Forschungszentrum Jülich GmbH, 52425 Jülich (DE)
(72) Erfinder: BRÖCKERHOFF, Peter, D-52428 Jülich (DE); VON LENSA, Werner, D-52379 Langerwehe (DE); REINECKE, Ernst-Arndt, D-52064 Aachen (DE); VOSWINKEL, Moritz, D-52062 Aachen (DE)
(74) Vertreter: Schüll, Gottfried, Dipl.-Phys.
(86) Internationale Anmeldenummer: EP9900107
(87) Internationale Veröffentlichungsnummer: WO99036923

(56) Entgegenhaltungen:
- EP-A- 0 256 379
- WO-A-94/01870
- WO-A-97/16832
- DE-A- 2 852 019
- US-A- 4 226 675
- US-A- 4 430 293

## Beschreibung

Die Erfindung betrifft eine Vorrichtung zur katalytischen Umsetzung von Wasserstoff, mit der sowohl in nichtinertisierten als auch in inertisierten Räumen, z. B. in Sicherheitsbehältern von Druck- und Siedewasserreaktoren oder bei weiteren Wasserstoffanwendungen, der störfallbedingt entstandene Wasserstoff effektiv und rückzündungsfrei beseitigt wird.

Der Wasserstoff kann im Fall des Druckwasserreaktors in Anwesenheit des im Behälter vorhandenen Luftsauerstoffs z. B. mittels katalytischer Rekombinatoren innerhalb der Vorrichtung direkt beseitigt werden, während beim Siedewasserreaktor der zur Reaktion notwendige Sauerstoff von außen in die Vorrichtung zugeführt wird.

Im Fall schwerer Störfälle in wassergekühlten Kernreaktoren gelangen Wasserdampf und Wasserstoff in den Sicherheitsbehälter. Die maximalen Wasserstoffmengen können sowohl bei Druck- als auch Siedewasserreaktoren etwa 20.000 mₙ³ betragen. Bei Druckwasserreaktoren besteht aufgrund des sich in den Sicherheitsbehältern (Containments) befindenden Luftsauerstoffs die Gefahr der unkontrollierten Entzündung mit anschließender Detonation und einer zusätzlichen dynamischen Druckbeanspruchung der Containmentwände. In einigen Containments von Siedewasserreaktoren befindet sich zur Inertisierung Stickstoff. Außerdem sind nachträgliche Inertisierungen nach Störfalleintritt in Diskussion, um eine explosive Reaktion des Wasserstoffs mit dem Luftsauerstoff zu vermeiden. Wasserdampf und Wasserstoff führen jedoch stets zu Druckund Temperaturerhöhungen in der Störfallatmosphäre. Die relative Druckerhöhung wird in Siedewasserreaktoren dadurch verstärkt, daß die Volumina ihrer Behälter nur etwa 20.000 m³ im Vergleich zu 70.000 m³ bei Druckwasserreaktoren betragen. Druck- und Temperaturerhöhungen führen zu einer erhöhten Beanspruchung der Containmentwände. Außerdem besteht bei Leckagen infolge des Überdrucks die Gefahr des Austritts radiotoxischer Substanzen.

Insbesondere bei nichtinertisierten Containments in Druckwasserreaktoren wird der Wasserstoff zudem zwecks Vermeidung von Explosionen katalytisch umgesetzt, wobei die Leistung der mit freier Konvektion durchströmten Rekombinatoren unter anderem durch die nicht zu überschreitende Zündtemperatur am Austritt bzw. an den Gehäuseoberflächen limitiert ist.

Die Wirksamkeit von Rekombinatoren kann aufgrund der Bildung von Schichten im oberen Teil der Containments, sogenannte Stratifikation, stark beeinträchtigt werden. Dies gilt besonders dann, wenn sich nichtkondisierbare Gase und schwebefähige Substanzen (Aerosole) an den Oberflächen der Rekombinatorplatten anlagern und deren Wirkung behindern.

Im Stand der Technik ist versucht worden, dem Problem der Anlagerung nichtkondensierbarer gasförmiger Stoffe mittels geneigter und mit Rippen versehener Kühlrohre zu begegnen und die abgekühlten nichtkondensierbaren Gase aufgrund ihrer höheren Dichte abströmen zu lassen. Dieses Verfahren versagt jedoch bei leichten nichtkondisierbaren Gasen, wie z. B. Wasserstoff oder Mischungen nichtkondensierbarer Gase mit Wasserstoff sowie bei Stratifikation. Die Kondensation des in den Störfallatmosphären enthaltenen Wasserdampfes führt zu dem gewünschten Ziel einer Druck- und Temperaturerniedrigung und somit zur Verringerung der Gefahr von Leckagen mit folgender Freisetzung radiotoxischer Substanzen. Der Partialdruck kondensierbarer und nichtkondensierbarer Gase wird jedoch lediglich durch die Abkühl- und Rekombinationseffekte beeinflußt. Er stellt somit langfristig eine treibende Kraft für die Leckage radiotoxischer Substanzen dar und sollte in möglichst kurzer Zeit in die Nähe des Atmosphärendrucks abgesenkt werden.

Die DE 42 21 693 A1, von der die vorliegende Erfindung ausgeht, offenbart ein Verfahren und eine Vorrichtung zur thermischen Rekombination eines Gases oder Gasgemisches, insbesondere von Wasserstoff und Sauerstoff in der Containment-Atmospähre einer Kernreaktoranlage, bei dem ein Reaktionsgas zunächst vermischt und anschließend einer Reaktionskammer zugeführt wird. Dabei wird zur Erhöhung der Rekombinationseffektivität das Reaktionsgas vor der Vermischung mit dem Gasgemisch und somit vor dem Eintritt in die Reaktionskammer vorgewärmt. In der Reaktionskammer findet dann die Rekombination des Wasserstoffes statt. Das die Reaktionskammer verlassende Gasgemisch wird anschließend einem Wärmetauscher zugeführt, der im Strömungsbereich vor dem Eintritt in die Reaktionskammer angeordnet ist, so daß dieser Wärmetauscher einerseits zum Aufwärmen des in die Reaktionskammer eintretenden Gasgemisches und andererseits zur Abkühlung des aus der Reaktionskammer austretende Gasgemisches dient.

Aus der DE 28 52 019 A ist weiterhin ein Verfahren und eine Vorrichtung zum katalytischen Rekombinieren von Wasserstoff und Sauerstoff bekannt, bei dem das aus dem Rekombinator austretende Dampf-Gasgemisch einem Dampfkühler zugeleitet wird, wodurch eine Abkühlung des Gasgemisches erzielt wird. Zur Heizung des Katalysatormaterials wird einerseits ein elektrisches Heizelement vorgeschlagen und andererseits wird zur weiteren Erwärmung des Katalysators insbesondere in der Startphase Heizdampf dem Gasgemisch zugeführt.

Beide zuvor beschriebenen aus dem Stand der Technik bekannten Vorrichtungen zur katalytischen Umsetzung von Wasserstoff weisen daher Mittel auf, die zu einer Erhitzung des Katalysatormaterials selbst oder zur Erhitzung des einströmenden Gasgemisches dienen. Dadurch wird die für die Rekombination erforderliche Temperatur des katalytischen Materials innerhalb des Rekombinators erreicht, jedoch ist der Anteil an Wasserdampf im Gasgemisch erheblich, der zu einer Inertisierung der katalytisch wirkenden Flächen innerhalb des Rekombinators führt. Zudem tritt durch die zusätzliche Aufheizung des Rekombinators das Problem einer möglichen Überschreitung der Zündtemperatur und der nachfolgenden Gefahr einer Rückzündung des Gasgemisches auf.

Aus der DE 28 52 019 A ist weiterhin ein Verfahren und eine Vorrichtung zum katalytischen Rekombinieren von Wasserstoff und Sauerstoff bekannt, bei dem das aus dem Rekombinator austretende Dampf-Gasgemisch einem Dampfkühler zugeleitet wird, wodurch eine Abkühlung des Gasgemisches erzielt wird. Zur Heizung des Katalysatormaterials wird einerseits ein elektrisches Heizelement vorgeschlagen und andererseits wird zur weiteren Erwärmung des Katalysators insbesondere in der Startphase Heizdampf dem Gasgemisch zugeführt.

Die US 4,430,293 offenbart eine Vorrichtung und ein Verfahren zum Beseitigen von Wasserstoff aus einer Containment-Atmosphäre. Dabei wird das Gasgemisch in die Vorrichtung geführt und zunächst durch einen Kondensator geführt, in dem das in dem Gasgemisch enthaltene Wasserdampf abgeschieden wird und dann in das Containment zurückgeführt wird. Der Kondensator arbeitet dabei in der Weise, dass das Gasgemisch durch eine Kühlschlange, durch die Wasser fließt, gekühlt wird und dadurch der Wasserdampf kondensiert. Im weiteren wird das Gasgemisch dann komprimiert, wiederum gekühlt und mit Hilfe eines Separators in einen wasserstoffreichen und einen wasserstoffarmen Anteil aufgeteilt. Der wasserstoffreiche Teil wird abgeführt, während der wasserstoffarme Teil in das Containment zurückgeführt wird.

Allen zuvor genannten Vorrichtungen bzw. Verfahren ist gemeinsam, dass das Gasgemisch zu den jeweiligen Vorrichtungen hingeführt werden muss, wobei zu diesem Zweck sogar Fördervorrichtungen vorgesehen sind. Die Vorrichtungen werden nicht selbstständig von dem Gasgemisch angeströmt. Ein Ausfall der Fördervorrichtung, was im Falle eines Störfalls nicht auszuschließen ist, führt unweigerlich zu einem Versagen Rekombinationssysteme und damit zu einer ungehinderten Anreicherung des Wasserstoffs in der Containment-Atmosphäre.

Der vorliegenden Erfindung liegt ausgehend vom Stand der Technik das technische Problem zugrunde, eine Vorrichtung zur katalytischen Umsetzung von Wasserstoff in einem ein Gasgemisch enthaltendem Containment bereitzustellen, die derart ausgebildet ist, dass keine Fördermittel notwendig sind, das Gasgemisch in die Vorrichtung zu dem Rekombinator zu führen, sondern das Gasgemisch selbstständig durch die Vorrichtung strömt.

Dieses technische Problem wird gelöst durch eine Vorrichtung mit einem Rekombinator, der eine Mehrzahl von katalytisch wirkenden Katalysatorelementen aufweist, mit einer ersten Kühlvorrichtung, die strömungsabwärts hinter dem Rekombinator angeordnet ist, und mit einer strömungsaufwärts des Rekombinators angeordneten das Gasgemisch kühlenden zweiten Kühlvorrichtung, wobei der Rekombinator, die erste Kühlvorrichtung und die zweite Kühlvorrichtung derart angeordnet sind, dass sie für das Gasgemisch durch Auftrieb anströmbar sind.

Somit wird erreicht, dass keine Fördermittel notwendig sind, um das Gasgemisch in die Vorrichtung zu leiten. Vielmehr wird der natürliche Auftrieb infolge der Erwärmung ausgenutzt, wodurch das Gasgemisch in die Vorrichtung strömt und zu dem Rekombinator gelangt. Daraus ergibt sich insbesondere, dass die Förderung des Gasgemisches ohne externe Energieversorgung erreicht wird und damit eine hohes Maß an passiver Sicherheit gewährleistet ist.

Ferner wird durch die Kühlvorrichtung, die hinter und benachbart zum Rekombinator angeordnet ist, erreicht, dass die bei der katalytischen Rekombination entstehende Reaktionswärme effektiv abgekühlt und aus der Störfallatmosphäre abgeleitet wird. Die Temperatur in der Störfallatmosphäre wird durch die katalytische Rekombination nicht weiter aufgeheizt, wodurch eine Überschreitung der Zündtemperatur am Austritt der Vorrichtung zur katalytischen Umsetzung des Wasserstoffes vermieden wird. Weiterhin wird die Effizienz der Vorrichtung zur katalytischen Umsetzung von Wasserstoff verbessert, indem strömungsaufwärts, also vor dem Eintritt des Gasgemischstromes in den Rekombinator, eine Kühlvorrichtung angeordnet ist. Dadurch wird die Inertisierung des Rekombinators durch den Wasserdampf verringert und ein Anspringen des Rekombinators verbessert, da Wasserdampf kondensiert wird, bevor er in den Rekombinator einströmen kann.

In bevorzugter Weise ist zwischen der in Strömungsrichtung ersten Kühlvorrichtung und dem Rekombinator eine Vorrichtung zur Trocknung der Gasströmung durch Tropfenabscheidung angeordnet. In dieser Vorrichtung befinden sich vorzugsweise Bleche mit Mehrfachumlenkungen, die in bekannter Weise die mitgerissenen oder im Kühler entstehenden Wassertropfen mit den anhaftenden Aerosolen weiter abtrennen und das in den Rekombinator eintretende Gasgemisch weiter vortrocknen, da Wasserdampf auf den katalytischen Rekombinationsprozeß inhibierend wirkt. Die Ausgestaltung der Vorrichtung zur Trocknung der Gasströmung erlaubt zudem ein widerstandsarmes Abströmen der bei niedrigen Wassersstoff gehalten nicht vom Rekombinator angesaugten, abgekühlten nichtkondensierbaren Gase sowie der abgeschiedenen Wassertropfen und Aerosole nach unten.

Bei einer bevorzugten Ausgestaltung der Erfindung besteht die vor dem Rekombinator angeordnete Kühlvorrichtung aus schräg nach unten verlaufenden Kühlrohren, die in vorgegebenen Abständen Rippen aufweisen. Somit kondensiert zum größten Teil der Wasserdampf, der im Gasgemisch enthalten ist. Das dann an den Kühlrohren der Kühlvorrichtung anhaftende Wasser läuft wegen der Schrägstellung der Kühlvorrichtung nach unten ab, so daß anhaftende nicht kondensierbare Gase und abgelagerte Aerosole durch das Kondensat immer wieder abgewaschen werden. Somit wird sowohl ein verschlechterter Wärmeübergang als auch eine schädliche Rückwirkung auf die katalytischen Oberflächen durch die Anlagerung nichtkondensierbarer Gase und Aerosole verringert oder sogar völlig vermieden. Somit findet also eine Trocknung des Wasserstoffs und der weiteren Substanzen über die Kühlvorrichtung statt, indem ein Teil des Wasserdampfs kondensiert wird.

Durch eine parallel zur Strömungsrichtung ausgerichtete Anordnung der Katalysatorelemente wird weiterhin gewährleistet, daß die Strömung nur unwesentlich behindert wird, so daß die für die Durchströmung der nachfolgend angeordneten Kühlvorrichtung notwendige Strömung aufrechterhalten bleibt. Daher ist in weiter bevorzugter Weise die Kühlvorrichtung im wesentlichen oberhalb des Rekombinators angeordnet. In weiter bevorzugter Weise ist die Kühlvorrichtung in Strömungsrichtung des Gasgemisches nach unten ausgerichtet, so daß das zunächst heiße Gasgemisch auch aufgrund der Abkühlung nach unten angetrieben wird. Daher werden insgesamt aufgrund der im wesentlichen vertikalen Ausrichtung sowohl Aufuriebsals auch Abtriebskräfte zur Erhöhung des Durchsatzes genutzt.

In weiter bevorzugter Weise ist der Rekombinator der Vorrichtung zur katalytischen Umsetzung des Wasserstoffes im wesentlichen parallel zur Kühlvorrichtung und zu der Vorrichtung zur Trocknung der Strömung angeordnet. Dadurch wird sichergestellt, daß der abgekühlte, gereinigte und vorgetrocknete Gasgemischstrom entweder bei geringen Wasserstoffkonzentrationen problemlos abströmen kann und die Vorrichtung damit als Kühler wirkt oder nahezu vollständig durch den Rekombinator hindurchgeführt wird. Die Gasgemischströmung wird dann - wie oben beschrieben - durch eine weitere Kühlvorrichtung hindurchgeführt. Es können in Anlehnung an im Stand der Technik beschriebenen Rekombinatoren aber auch andere geometrische, z. B. waagerechte Katalysatoranordnungen in senkrechten Gehäusen mit den vorgeschlagenen Kühlern und Strömungsumlenkungen kombiniert werden.

Für die zuvor beschriebenen Ausgestaltungen der Erfindung sollen nach Möglichkeit die beschriebenen Sicherheitseinrichtungen den Prinzipien passiver Sicherheit genügen, d. h. ohne externe Energieversorgung und Ansteuerung arbeiten. Dies wird z. B. mit der schrägen Anordnung der Kühlrohre zur Unterstützung der Naturkonvektion in den Kühlrohren erreicht. Grundsätzlich sind aber auch Anordnungen unter anderen Winkelstellungen mit Rücksicht auf kompakte Bauweise oder auf die zur Verfügung stehenden Räumlichkeiten ausführbar.

Der im Fall des Siedewasserreaktors zur katalytischen Beseitigung des Wasserstoffs benötigte Sauerstoff wird weiterhin nur bei hinreichender Wasserstoffkonzentration in der Vorrichtung gezielt und kontrolliert von außen in einer Weise zugeführt, daß sich kein zündfähiges Gemisch im Containment infolge überschüssigen Sauerstoffs bilden kann.

Im folgenden wird die Erfindung anhand *von* Ausführungsbeispielen näher erläutert, wobei auf die Zeichnung Bezug genommen wird. In der Zeichnung zeigt
- Fig. 1: ein erstes Ausführungsbeispiel einer Vorrichtung zur katalytischen Umsetzung von Wasserstoff mit einer vorgeschalteten Kühlvorrichtung und einer Vorrichtung zur Trocknung der Strömung für einen Einsatz in einem Druckwasserreaktor,
- Fig. 2: ein zweites Ausführungsbeispiel einer Vorrichtung zur katalytischen Umsetzung von Wasserstoff für einen Einsatz in einem Siedewasserreaktor,
- Fig. 3: ein Ausführungsbeispiel einer Vorrichtung zum Trocknen des Gasstromes, die in den in den Fig. 1 bis 4 dargestellten Vorrichtungen zur katalytischen Umsetzung von Wasserstoff verwendet wird.

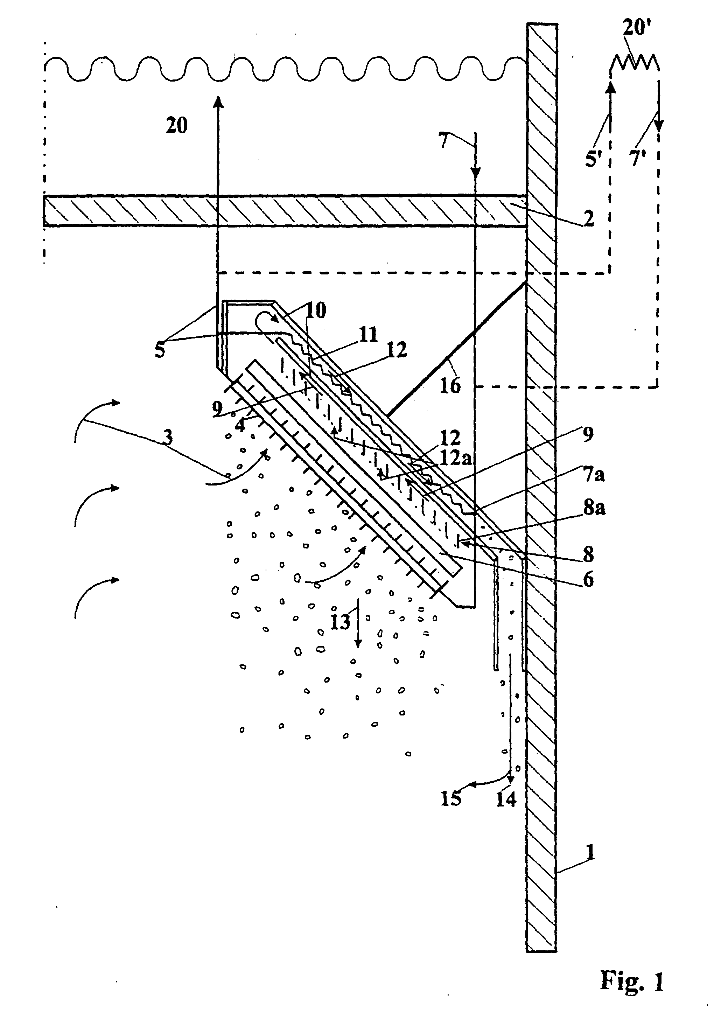

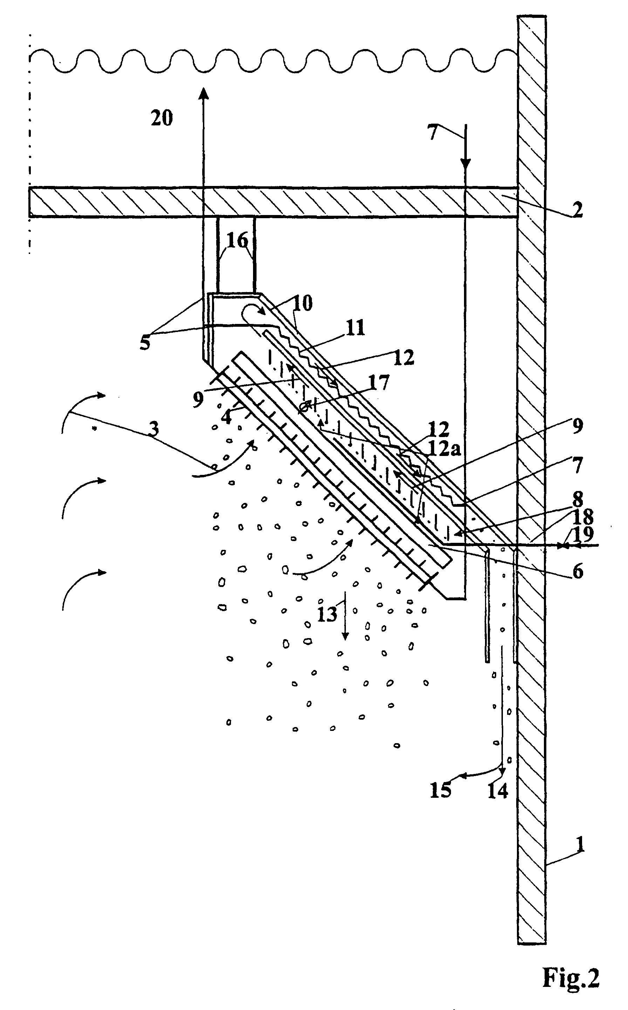

In den Fign. 1 und 2 ist jeweils ein Ausschnitt aus einer Reaktoranlage dargestellt. Es wird beispielhaft und schematisch die Anordnung der verschiedenen Ausführungsbeispiele der Vorrichtung zur katalytischen Umsetzung von Wasserstoff innerhalb eines Containments eines Druckwasser- oder Siedewasserreaktors dargestellt. Das Containment weist dabei Wände 1 und 2 auf, die die äußeren Begrenzungen darstellen. Bei einer Freisetzung von Wasserstoff strömt das aus Wasserdampf, Wasserstoff und ggf. aus Luft sowie aus Aerosolen bestehende Gasgemisch, das mit Pfeilen 3 gekennzeichnet ist, infolge des Auftriebs in den Eintritt der Vorrichtung.

Wie in Fig. 1 dargestellt ist, weist das erste Ausführungsbeispiel der erfindungsgemäßen Vorrichtung zur katalytischen Umsetzung von Wasserstoff einen Rekombinator 8 und eine Kühlvorrichtung 10 auf. Der Rekombinator 8 weist dabei eine Mehrzahl von katalytisch wirkenden Platten 8a auf. Anstelle der Platten 8a können auch Folien verwendet werden. Weiterhin ist der Rekombinator 8 direkt im Containment angeordnet, das das Gasgemisch enthält. Die Kühlvorrichtung 10 ist strömungsabwärts hinter dem Rekombinator 8 angeordnet und ist benachbart zu diesem positioniert.

Das zugeführte Gasgemisch, das Wasserstoff und Sauerstoff enthält, entzündet sich an den Oberflächen der Platten 8a, die mit katalytisch wirkenden Substanzen wie beispielsweise Edelmetallen belegt sind. Anstelle des in Fig. 1 dargestellten Plattenrekombinators 8 können auch andere Rekombinatorsysteme mit niedrigem Strömungswiderstand eingesetzt werden. Aufgrund der exothermen Reaktion steigen das erwärmte Gasgemisch und die Verbrennungsprodukte aus der Rekombination nach oben in den Spalt, der sich zwischen dem Rekombinator 8 und der unteren Wand der nachgeschalteten Kühlvorrichtung 10 befindet. Aufgrund der thermischen Beanspruchung kann die untere Wand der Kühlvorrichtung 10 thermisch gegenüber dem Rekombinator 8 isoliert werden, damit eine Wärmeübertragung über diese Wand verringert wird.

Das heiße Gasgemisch, das mit Pfeilen 9 dargestellt ist, wird oben umgelenkt und in die Kühlvorrichtung 10 eingeleitet. Dabei ist die Kühlvorrichtung 10 zweckmäßigerweise als Gegenströmer ausgebildet, bei dem die Strömungsrichtungen des Gasgemischstromes einerseits und des Stromes des Kühlmittels in einer Kühlmittelleitung 11 entgegengesetzt ausgerichtet sind. Selbstverständlich ist auch eine gleichsinnige Ausrichtung des Gasgemischstromes und des Kühlmittelstromes möglich. Das Kühlmittel, das vorliegend Kühlwasser ist, wird über eine Leitung 7 der Kühlmittelleitung 11 zugeführt. Das warme Wasser wird über die Leitung 5 in eine Wasservorlage 20 eingespeist, die sich - wie in Fig. 1 dargestellt - oberhalb der Vorrichtung zur katalytischen Umsetzung von Wasserstoff und außerhalb des Containments befindet.

Während das heiße Gasgemisch durch die Kühlvorrichtung in der mit dem Pfeil 12 dargestellten Richtung durchströmt, gibt das Gasgemisch einen großen Teil der enthaltenen Reaktionswärme ab und erfährt somit einen zusätzlichen Abtrieb. Weiterhin wird ein Teil des bei der katalytischen Umsetzung des Wasserstoffes entstandenen Wasserdampfes kondensiert. Das Kondensat wird zusammen mit dem abgekühlten Gasgemischstrom aus der Kühlvorrichtung 10 nach unten abgeleitet, wie mit dem Pfeil 14 dargestellt ist. Es kann bei Bedarf für weitere Kühlzwecke Verwendung finden. Der gasförmige Anteil des Gemisches - Stickstoff sowie geringe Mengen nichtumgesetzten Wasserstoffs und Sauerstoffs und nichtkondensierten Wasserdampfes - ist mit dem Pfeil 15 gekennzeichnet. Schließlich ist die gesamte Vorrichtung in einem seitlich geschlossenen Gehäuse angeordnet, das mit Hilfe einer schematisch dargestellten Halterung 16 beispielsweise an einer Wand 1 des Containments befestigt ist.

Zusätzlich zum Rekombinator 8 und zur Kühlvorrichtung 10 weist das Ausführungsbeispiel, das in Fig. 1 dargestellt ist, eine den Gasgemischstrom kühlende Kühlvorrichtung 4 sowie eine Vorrichtung 6 zur Trocknung der Strömung auf.

Die Kühlvorrichtung 4 kühlt das heiße aufsteigende Gasgemisch ab, wobei der im Gasgemisch enthaltene Wasserdampf zum größten Teil kondensiert wird. Dargestellt ist in Fig. 1 lediglich ein Rohr aus einem Rohrbündel der auch als Gebäudekühler bezeichneten Kühlvorrichtung 4. Zur Verbesserung der Wärmeübergangskoeffizienten sind die Rohroberflächen mit Rippen in einer Weise versehen, daß abgelagerte Aerosole durch das Kondensat immer wieder abgewaschen werden bzw. als Kondensatkeime wirken und niedergeschlagen werden.

Wie in Fig. 1 weiter dargestellt ist, ist die Kühlvorrichtung 4 bzw. das Kühlrohr im Hinblick auf die Nutzung von Auf- und Abtriebskräften für das Gasgemisch und für die innere Durchströmung der Kühlrohre optimiert. Dazu weisen die Kühlrohre eine Neigung auf, um das sich anlagernde Kondensat zu einem Ablaufen zu zwingen. Somit wird ein effizientes Kühlen des Gasgemischstromes gewährleistet. Die Kühlvorrichtung 4 wird von einem Kühlmittel, vorzugsweise Kühlwasser, durchströmt, das über eine Leitung 7 zugeführt und über eine Leitung 5 abgeführt wird. Dabei dient die bereits erwähnte Wasservorlage 20, die oberhalb der Vorrichtung zur katalytischen Umsetzung von Wasserstoff und außerhalb des Containments angeordnet ist, als Reservoir für das Kühlmittel.

Die vom Kühlwasser in der Kühlvorrichtung 4 aufgenommene Wärme wird infolge des thermischen Auftriebes über die Leitung 5 an die oben angeordnete Wasservorlage 20 abgeführt, so daß ständig über die Leitung 7 neues Kühlwasser nachgezogen wird. Sollte die Wasservorlage 20 innerhalb des Reaktors fehlen, so ist auch eine Abfuhr der Wärmeenergie nach außen an einen höher gelegenen Kühlwassertank oder Kühlvorrichtung 20' möglich, wie in Fig. 1 angedeutet ist.

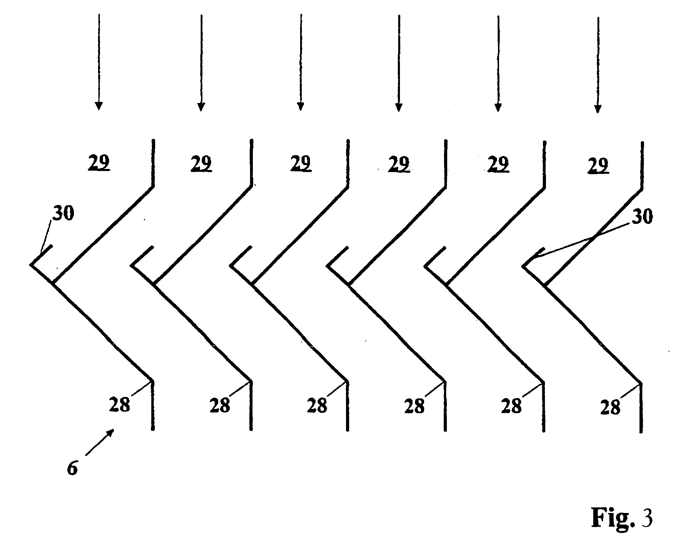

Das an der Kühlvorrichtung 4, dem Gebäudekühler, abgekühlte Gemisch durchströmt dann die Vorrichtung 6 zur Trocknung des Gasstromes, die in Fig. 3 dargestellt ist. Die Vorrichtung 6 dient zur Abtrennung von Wassertropfen und Aerosolen, indem in bekannter Weise ein Teil der Strömung z. B. durch Beeinflussung der Grenzschicht abgebremst wird oder durch Zentrifugalkräfte die verbliebenden Wassertropfen in Umlenkungen abgeschieden werden.

Wie in Fig. 3 dargestellt ist, weist dazu die Vorrichtung 6 zur Trocknung des Gasstromes eine Mehrzahl von parallel zueinander angeordneten Wänden 28 auf, die parallele Strömungskanäle 29 bilden. Durch den gekrümmten bzw. mit Winkeln versehenen Verlauf der Wände 28 wird die Strömung zu mehrfachen Richtungswechseln gezwungen, so daß Verwirbelungen auftreten. Zusätzlich sind Vorsprünge 30 vorgesehen, an denen sich die mit Pfeilen 31 gekennzeichnete Gasströmung anstaut, so daß sich an den Wänden 28 der Wasserdampf sowie die vorhandenen Aerosole abscheiden. Somit kommt es zu einer Trocknung und Reinigung des Gasgemischstromes innerhalb der Vorrichtung 6.

Bei geringen Wasserstoffkonzentrationen arbeiten die Vorrichtung zur katalytischen Umsetzung von Wasserstoff im wesentlichen als Gebäudekühler, während bei höheren Wasserstoffmengen das auf diese Weise abgekühlte, gereinigte und getrocknete Gasgemisch 12a dann in den Rekombinator 8 gelangt. Die dargestellte Ausführungsform des Rekombinators 8 mit im wesentlichen parallel zueinander angeordneten Platten 8a ist in seiner Ausrichtung und Anordnung der Platten 8a an die Neigung der Kühlvorrichtung 4 sowie der Vorrichtung 6 zur Trocknung der Strömung angepaßt. Dadurch wird der zuvor beschriebene Abströmvorgang nicht behindert, so daß die leichten Gase nach oben nahezu ungehindert wegströmen können, um die Thermosiphonwirkung der folgenden Gasströmungswege zu überwinden. Die vorgeschaltete Kühlvorrichtung wirkt zudem rückzündungshemmend, da die höheren Oberflächentemperaturen des Rekombinators gegenüber der Störfallatmosphäre abgeschirmt werden.

In Fig. 2 ist die zuvor mit Bezug auf Fig. 1 beschriebene Vorrichtung in einem Containment bzw. in der Kondensationskammer eines Siedewasserreaktors angeordnet, dessen Atmosphäre inertisiert ist. Da kein Sauerstoff vorhanden ist, muß er, wenn der Wasserstoff innerhalb des Containments katalytisch abgebaut werden soll, von außen gezielt zugeführt werden. Daher ist eine genaue Kontrolle der Wasserstoffkonzentration erforderlich. Der Wasserstoffsensor 17 kann, wie dargestellt, hinter dem Tropfenabscheider 6 angeordnet werden. Der Sauerstoff wird gezielt von außen über eine Leitung 18 vor die Rekombinatoreinheit fein verteilt eingespeist. Zur Vermeidung einer zusätzlichen Druckerhöhung der Containmentatmosphäre sollte reiner Sauerstoff zugeführt werden. Seine Dosierung läßt sich mittels eines Ventils 19 vornehmen. Die Bemessung erfolgt so, daß sich der Sauerstoff bei Wasserstoffüberschuß innerhalb der Vorrichtung vollständig umsetzt und sich somit im Containment kein zündfähiges Gemisch bilden kann.

### Bezugszeichenliste

- 1: Wand
- 2: Wand
- 3: Containmentatmosphäre
- 4: Kühlvorrichtung
- 5: Kühlwasseraustritt
- 5': Kühlwasseraustritt
- 6: Tropfenabscheider
- 7: Kühlwassereintritt
- 7': Kühlwassereintritt
- 8: katalytischer Rekombinator
- 8a: Platte
- 9: Reaktionsgase (heiß)
- 10: Kühlvorrichtung
- 11: Kühlmittelleitung
- 12: Reaktionsgase (abgekühlt)
- 12a: Containmentatmosphäre (abgekühlt und getrocknet)
- 13: Kondensat und Aerosole
- 14: Kondensat
- 15: gasförmige Substanzen
- 16: Halterung
- 17: Wasserstoffsensor
- 18: Sauerstoffleitung
- 19: Regelventil
- 20: inneres Kühlwasserbecken
- 20': außerhalb liegendes Kühlwasserbecken
- 28: Wände
- 29: Strömungskanal
- 30: Vorsprung
- 31: Einlaß
- 32: Auslaß

## Patentansprüche

1. Vorrichtung zur katalytischen Umsetzung von Wasserstoff in einem ein Gasgemisch enthaltenden Containment
- mit einem Rekombinator (8), der eine Mehrzahl von katalytisch wirkenden Katalysatorelementen (8a) aufweist,
- mit einer ersten Kühlvorrichtung (10), die strömungsabwärts hinter dem Rekombinator (8) angeordnet ist und
- mit einer strömungsaufwärts des Rekombinators (8) angeordneten das Gasgemisch kühlenden zweiten Kühlvorrichtung (4),
**dadurch gekennzeichnet,**
- **dass** der Rekombinator (8), die erste Kühlvorrichtung (10) und die zweite Kühlvorrichtung (4) derart angeordnet sind, dass sie für das Gasgemisch durch Auftrieb anströmbar sind.

2. Vorrichtung nach Anspruch 1,
**dadurch gekennzeichnet,**
**dass** zwischen der zweiten Kühlvorrichtung (4) und dem Rekombinator (8) eine Vorrichtung (6) zur Trocknung der Strömung angeordnet ist.

3. Vorrichtung nach Anspruch 2,
**dadurch gekennzeichnet,**
**dass** die Vorrichtung (6) zur Trocknung der Strömung aus parallel zueinander angeordneten Blechen besteht, die gewinkelt oder gebogen ausgestaltet sind.

4. Vorrichtung nach einem der Ansprüche 1 bis 3,
**dadurch gekennzeichnet,**
**daß** die erste Kühlvorrichtung (10) im wesentlichen oberhalb des Rekombinators (8) angeordnet ist.

5. Vorrichtung nach einem der Ansprüche 1 bis 4,
**dadurch gekennzeichnet,**
**dass** zumindest eine Trennwand, der ersten Kühlvorrichtung (10) und der Rekombinator (8) voneinander thermisch isoliert angeordnet sind.

6. Vorrichtung nach einem der Ansprüche 1 bis 5,
**dadurch gekennzeichnet,**
**dass** die erste Kühlvorrichtung (10) in Strömungsrichtung des Gasgemisches nach unten ausgerichtet ist.

7. Vorrichtung nach einem der Ansprüche 2 bis 6,
**dadurch gekennzeichnet,**
**dass** die zweite Kühlvorrichtung (4) und die Vorrichtung (6) zur Trocknung der Strömung schräg nach unten verlaufend im Gasgemischstrom angeordnet sind.

8. Vorrichtung nach einem der Ansprüche 2 bis 7,
**dadurch gekennzeichnet,**
**dass** der Rekombinator (8) sich im wesentlichen parallel zur zweiten Kühlvorrichtung (4) und zu der Vorrichtung (6) zur Trocknung der Strömung erstreckt.

9. Vorrichtung nach einem der Ansprüche 1 bis 8,
**dadurch gekennzeichnet,**
**dass** mindestens ein Sensor (17) zur Messung der Wasserstoffkonzentration in Strömungsrichtung vor dem Rekombinator (8) angeordnet ist.

10. Vorrichtung nach einem der Ansprüche 1 bis 9,
**dadurch gekennzeichnet,**
**dass** eine Vorrichtung (18) zur Zuführung von Sauerstoff vorgesehen ist, die dem Gasgemisch vor dem Eintritt in den Rekombinator (8) Sauerstoff zufügt.

## Claims

1. A device for catalytically converting hydrogen in a containment holding a gas mixture,
- having a recombinator (8) which has a plurality of catalytically acting catalyst elements (8a),
- having a first cooling device (10) which is arranged downstream of the recombinator (8), and
- having a second cooling device (4) which is arranged upstream of the recombinator (8) and cools the gas mixture,
**characterised in that**
- the recombinator (8), the first cooling device (10) and the second cooling device (4) are arranged such that the gas mixture is able to flow through them as a result of buoyancy.

2. A device according to Claim 1, **characterised in that** a device (6) for drying the flow is arranged between the second cooling device (4) and the recombinator (8).

3. A device according to Claim 2, **characterised in that** the device (6) for drying the flow comprises panels arranged parallel to one another and shaped to be angled or bent.

4. A device according to one of Claims 1 to 3, **characterised in that** the first cooling device (10) is arranged substantially above the recombinator (8).

5. A device according to one of Claims 1 to 4, **characterised in that** at least one partition wall of the first cooling device (10) and the recombinator (8) are arranged to be thermally insulated from one another.

6. A device according to one of Claims 1 to 5, **characterised in that** the first cooling device (10) is directed downwards in the direction in which the gas mixture flows.

7. A device according to one of Claims 2 to 6, **characterised in that** the second cooling device (4) and the device (6) for drying the flow are arranged extending obliquely downwards in the flow of the gas mixture.

8. A device according to one of Claims 2 to 7, **characterised in that** the recombinator (8) extends substantially parallel to the second cooling device (4) and the device (6) for drying the flow.

9. A device according to one of Claims 1 to 8, **characterised in that** at least one sensor (17) for measuring the hydrogen concentration is arranged upstream of the recombinator (8) as seen in the direction of flow.

10. A device according to one of Claims 1 to 9, **characterised in that** a device (18) for supplying oxygen is provided, which adds oxygen to the gas mixture before it enters the recombinator (8).

## Revendications

1. Dispositif de conversion catalytique d'hydrogène dans une cuve de confinement contenant un mélange gazeux, comprenant :
- un recombinateur (8), qui présente une pluralité d'éléments catalytiques (8a) à action catalytique,
- un premier dispositif de refroidissement (10), qui est agencé en aval derrière le recombinateur (8), et
- un second dispositif de refroidissement (4) refroidissant le mélange gazeux et agencé en amont du recombinateur (8),
**caractérisé en ce que** le recombinateur (8), le premier dispositif de refroidissement (10) et le second dispositif de refroidissement (4) sont agencés de sorte qu'ils puissent être traversés par poussée verticale du mélange gazeux.

2. Dispositif selon la revendication 1,
**caractérisé en ce qu'**un dispositif (6) pour le séchage de l'écoulement est agencé entre le second dispositif de refroidissement (4) et le recombinateur (8).

3. Dispositif selon la revendication 2,
**caractérisé en ce que** le dispositif (6) pour le séchage de l'écoulement est constitué de tôles agencées parallèlement l'une à l'autre, qui sont conformées coudées ou pliées.

4. Dispositif selon l'une quelconque des revendications 1 à 3,
**caractérisé en ce que** le premier dispositif de refroidissement (10) est agencé sensiblement au-dessus du recombinateur (8).

5. Dispositif selon l'une quelconque des revendications 1 à 4,
**caractérisé en ce qu'**au moins une cloison, le premier dispositif de refroidissement (10) et le recombinateur (8) sont agencés de manière à être isolés thermiquement les uns des autres.

6. Dispositif selon l'une quelconque des revendications 1 à 5,
**caractérisé en ce que** le premier dispositif de refroidissement (10) est orienté vers le bas dans le sens d'écoulement du mélange gazeux.

7. Dispositif selon l'une quelconque des revendications 2 à 6,
**caractérisé en ce que** le second dispositif de refroidissement (4) et le dispositif (6) pour le séchage de l'écoulement sont agencés en oblique en s'étendant vers le bas dans le courant de mélange gazeux.

8. Dispositif selon l'une quelconque des revendications 2 à 7,
**caractérisé en ce que** le recombinateur (8) s'étend sensiblement parallèlement au second dispositif de refroidissement (4) et au dispositif (6) pour le refroidissement de l'écoulement.

9. Dispositif selon l'une quelconque des revendications 1 à 8,
**caractérisé en ce qu'**au moins un capteur (17) pour la mesure de la concentration en hydrogène est agencé dans le sens d'écoulement devant le recombinateur (8).

10. dispositif selon l'une quelconque des revendications 1 à 9,
**caractérisé en ce qu'**il est prévu un dispositif (18) pour acheminer de l'oxygène, qui ajoute de l'oxygène au mélange gazeux avant l'entrée dans le recombinateur (8).
